# EUROPEAN PATENT APPLICATION

(11) **EP 1 281 681 A1**
(43) Date of publication of application: **05.02.2003**
(21) Application number: 02015638.6
(22) Date of filing: 16.07.2002
(51) Int. Cl.: C03B 27/04

(54) **Tempered glass and laminated glass employing it**

(30) Priority: 31.07.2001 JP 2001232359
(71) Applicant: ASAHI GLASS COMPANY LTD., Tokyo 100-8405 (JP)
(72) Inventor: Seto, Shigeyuki, Asahi Glass Fine Techno Co., Ltd, Yonezawa-shi, Yamagata (JP); Imamura, Takaharu, Asahi Glass Company, Limited, Chita-gun, Aichi (JP)
(74) Representative: Müller-Boré & Partner Patentanwälte

(57) **Abstract**

A tempered glass sheet having a compressive stress layer formed at the surface and a tensile stress layer formed inside, wherein the thickness (t) is from 1.5 to 3.5mm, and the minimum thickness (a) of the compressive stress layer in the direction of glass thickness is from 0.15 to 0.7mm. The tempered glass sheet may be bent for use as part of an automobile windshield and may form part of a laminated glass sheet product having an interlayer. The tempered glass sheet is obtainable by air-quenching.

## Description

The present invention relates to a tempered glass and a laminated glass employing it.

In recent years, a social interest in the environmental issues has been rising, and in the automobile industry, it has been strongly desired to improve the gasoline mileage by reducing the weight of an automobile body. Consequently, it is desired to reduce the weight of automobile related parts more than before, and the demand for window glass is not an exception. In an attempt to reduce the weight of window glass for automobiles, it has been tried to reduce the thickness of the glass sheet for the weight reduction. However, it is not easy to practically realize such an idea from the viewpoint of e.g. safety.

Various safety glasses are used for windows of automobiles. Especially for e.g. a side window or a rear window, a tempered glass is commonly used. The tempered glass is produced by tempering a heated glass sheet by air-quenching, and has a compressive stress layer at the surface and a tensile stress layer inside. Thus, by the balance of stresses in both stress layers, the tempered glass is provided with strength sufficient to bear a tensile force exerted to the surface of the glass sheet.

Further, the tempered glass has not only such a characteristic that it has such high strength, but also a characteristic that it becomes grainy fragments in the event of fracture, whereby it is less likely to injure a human body. Namely, if a crack having a depth reaching the tensile stress layer, enters in the compressive stress layer at the surface, the balance of stresses in both stress layers collapses, and countless cracks spread in all directions, and thus fragments of the glass sheet become grainy, whereby sharp fragments are not likely to be formed.

Thus, in order to improve the safety, a tempered glass is used for windows of automobiles. However, if the thickness of the glass sheet is reduced for weight reduction of the glass sheet, the following problems may occur.

If the thickness of a glass sheet is reduced, the thickness of the compressive stress layer at the surface of the glass sheet also decreases. A tempered glass is a product produced by quenching a heated glass sheet to form a temperature difference between the surface and inside, and by this temperature difference, a compressive stress layer is formed at the surface, and a tensile stress layer is formed inside. Therefore, the thinner the thickness of the glass sheet, the less likely the formation of such a temperature difference, and the thinner the thickness of the compressive stress layer formed at the surface of the glass sheet. As a result, even a very small crack is likely to reach the tensile stress layer inside the glass sheet, whereby the glass sheet is likely to fracture.

Further, the tensile stress inside a glass sheet and the compressive stress at the surface balance throughout the glass sheet as a whole. And if the glass sheet is assumed to have an infinite size, the compressive stress at the surface of the glass sheet and the tensile stress inside balance in the direction of glass sheet thickness. However, a real glass sheet has a finite size, and when quenched, it will be cooled from the end surface of the glass sheet, so that a compressive stress layer will also be formed at the end surface. In order to balance with such a compressive stress at the end surface, the thickness of the compressive stress layer formed in the area slightly closer to the center of the glass sheet from the end surface needs to be thinner than the thickness of the compressive stress layer formed in the central region of the glass sheet, and as a result, the glass sheet is likely to fracture by a very small crack.

Under the circumstances, heretofore, it has been popular to cover and reinforce the peripheral portion of a glass sheet with a molding made of a synthetic resin or with a garnish made of a metal. However, for recent automobiles, a design has been popular such that a glass sheet is attached to an opening of a window with its peripheral portion and end surface being bare, and as a result, the portion having a thin compressive stress layer is likely to be exposed, and thus a crack is more likely to occur now.

It is an object of the present invention to provide a tempered glass capable of maintaining sufficient strength even if the thickness is made thin to reduce the weight of the glass sheet, particularly the one capable of maintaining sufficient strength at the peripheral portion of the glass sheet, and to provide a laminated glass employing it.

In order to achieve the above object, the present invention provides a tempered glass having a compressive stress layer formed at the surface and a tensile stress layer formed inside, wherein the glass thickness (t) is from 1.5 to 3.5 mm, and the minimum thickness (a) of the compressive stress layer in the direction of glass thickness is from 0.15 to 0.7 mm.

Further, the present invention provides a laminated glass employing such a tempered glass.

In the accompanying drawings:
Fig. 1 is a partial cross-sectional view illustrating one embodiment of the present invention.
Fig. 2(a) is a block diagram showing the construction of an apparatus for measuring the thickness of the compressive stress layer.
Fig. 2(b) is a view from a direction of line α-α' in Fig. 2(a).
Fig. 3 is a plan view schematically illustrating scattered light displayed on a display device.
Figs. 4(a) to 4(c) are plan views schematically illustrating scattered light when phase difference is given.
Now, an embodiment of the present invention will be described with reference to the drawings.

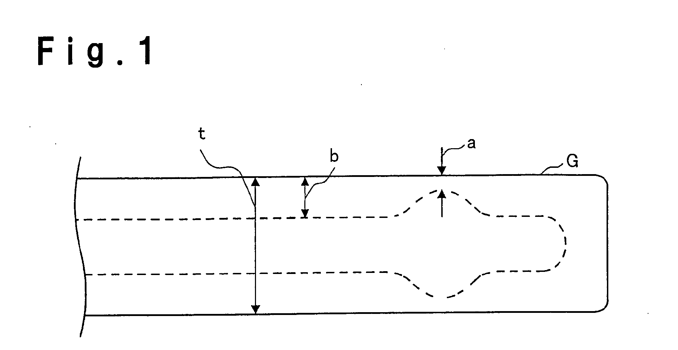

Fig. 1 is a partial cross-sectional view schematically showing an embodiment of the present invention. A glass sheet G shown here is used as a window glass (e.g. side window glass or rear window glass) for automobiles, and the cross-section of its edge portion is zoomed up in the Fig. A tensile stress layer is inside of the glass sheet G, and a region surrounding it, is a compressive stress layer. In the Fig., the thickness of the glass sheet G is shown as (t), the thickness of the compressive stress layer at its thinnest portion is shown as (a), and the average thickness of the compressive stress layer is shown as (b).

### 1. Thickness of compressive stress layer

The portion of a window glass sheet exposed to the external world is in an environment where it has frictions with other objects by many external factors. Especially the portion of a window glass sheet for an automobile, exposed to the outside of the automobile is in an environment where it is likely to have frictions with many objects including a brush for car washing. Further, a glass sheet for a sliding window among windows of automobiles, has a friction at its peripheral portion with a sash by opening or closing the window. By such a friction with other objects, a scratch may be formed on the surface of the glass sheet. Though the scratch is a very small flaw, if the flaw grows through the compressive stress layer and reaches the tensile stress layer, the glass sheet will be fractured.

The thickness of the glass sheet of the present invention is from 1.5 to 3.5 mm. In the case of a glass sheet having a thickness exceeding 3.5 mm, it is possible to obtain a compressive stress layer having a certain degree of thickness against the thickness of the sheet by a normal thermally tempering method. On the other hand, as the thickness of the sheet is made thin, the thickness of the compressive stress layer tends to be thin.

Except for such a case as a flaw is imparted to the surface of a glass sheet maliciously by a criminal, it has been confirmed by tests and experience by the present inventors that the depth of a flaw formed on the surface of a glass sheet by a friction with other objects in a normal operation environment, is less than 0.15 mm. Therefore, for a glass sheet having a thickness of from 1.5 to 3.5 mm, it is effective to make the minimum thickness of the compressive stress layer to be at least 0.15 mm.

Further, in order to make the thickness of the compressive stress layer thicker in a glass sheet having a thickness of from 1.5 to 3.5 mm, it is necessary to carry out cooling by a much higher cooling capacity than that for quenching by a normal thermally tempering method. However, it is difficult to realize such cooling from the viewpoint of the facility such that the blower has to be enlarged. Under the circumstances, by tests and experience by the present inventors, it has been confirmed effective to adjust the minimum thickness of the compressive stress layer to be at most 0.7 mm.

On the other hand, it is preferred that the relations between the minimum thickness (a) of the compressive stress layer and the glass thickness (t), and between an average thickness (b) of the compressive stress layer and the glass thickness (t) satisfy 0.1≦a/t ≦0.2 and 0.15≦b/t≦0.25, and the reason is as follows.

If the thickness of the compressive stress layer at the surface of a glass sheet and the thickness of the tensile stress layer inside the glass sheet become extremely out of balance in order to balance the compressive stress at the surface of the glass sheet and the tensile stress inside the glass sheet, there will be the following problems.

As a tempered glass having a sufficient strength against scratching or a flaw, the tempered glass of the present invention has a minimum thickness of the compressive stress layer of from 0.15 to 0.7 mm. Whereas, the thickness (t) of the glass sheet is from 1.5 to 3.5 mm. As a result of the tests conducted by the present inventors, it was found to be preferred to satisfy 0.1≦a/t≦0.2 and 0.15≦b/t≦0.25.

It is preferred to obtain a laminated glass for automobile windows, particularly a laminated glass for sliding windows of automobiles, by employing the tempered glass of this embodiment. Namely, for the purpose of improving the antitheft ability and the sound insulating ability, it has been proposed to use a laminated glass comprising two glass sheets having a thickness of about 2 mm bonded one another via an interlayer. The glass sheets used in this case are tempered glass having the degree of tempering adjusted to be slightly lower than that of usual tempered glass. Accordingly, their strength is lower than that of an automobile sliding window employing common tempered glass. Though the strength, particularly the strength against collision of the glass sheets themselves, lowers, the laminated glass as a whole has sufficient strength for a window for automobiles.

However, as the sheet thickness becomes thin, the thickness of the compressive stress layer formed at the surface of the glass sheet becomes thin. The peripheral portion of the glass sheet for a sliding window for automobiles, has a friction with glass-runchannel in a sash when it is guided by the sash at the time of opening/closing of the window. Accordingly, the portion having a thin compressive stress layer is placed in an environment where a scratch is likely to be formed. Therefore, in a case where a laminated glass is used for such a sliding window of an automobile, it is beneficial to employ the tempered glass of the present invention excellent in scratch resistance.

### 2. Process for production

Here, a process for producing glass G will be described. At first, a glass sheet cut into a desired shape is transported into a heating furnace and heated to a temperature for bending below the softening point of the glass, whereupon it is processed into a desired shape by e.g. press molding. Then, the glass sheet bent is placed on a ring-shaped holder member to support the peripheral portion of the glass sheet, and the glass sheet is cooled by a high pressure air blown from a plurality of blow nozzles facing to the glass sheet. As a result, a compressive stress layer is formed at the surface of glass sheet G, and a tensile stress layer is formed inside. The thickness of the compressive stress layer varies depending on the thickness of the glass sheet and the blowing pressure of the air.

Further, in a method of tempering a glass sheet placed on a ring by air-quenching (JP-A-2000-281369, etc.), cooling of the peripheral portion of the glass sheet supported by the ring is prevented, and the thickness of the compressive stress layer tends to be thin. Therefore, it is necessary to make it possible to form a desired compressive stress layer even at the peripheral portion of the glass sheet by such a method as oscillating the glass sheet or adjusting the flow rate of the cooling air blown to the peripheral portion of the glass sheet.

On the other hand, in a method of not using a ring at the time of cooling, namely in a method of air-quenching a glass sheet while transporting the glass sheet by a roller or an air floating bed, the supporting position of the glass sheet keeps changing by the transportation, whereby there will be no possibility that cooling becomes insufficient at a particular portion of the glass sheet. Therefore, a compressive stress layer having a sufficient thickness can be formed even without adjusting the cooling air depending upon the portion of the glass sheet. Accordingly, in the present invention, it is preferred to employ a method wherein no ring is used.

As a method wherein no ring is used, a method disclosed in JP-A-2001-2434 may be mentioned. According to this method, a glass sheet is heated in a heating furnace at the temperature for bending, whereupon the glass sheet is transported on a plurality of rollers which move up and down, whereby the glass sheet is bent following a concavely curved transportation surface formed by the plurality of rollers. The glass sheet bent is transported to a cooling zone by a plurality of rollers moving up and down, and cooled as it is transported, by a cooling air blown from blowing nozzles disposed between the plurality of rollers. In this case, the supporting position of the glass sheet keeps changing by the transportation by the rollers, whereby there will be no possibility that cooling becomes insufficient at a particular portion of the glass sheet.

By laminating a plurality of tempered glasses produced as described above and interlayers made of a resin such as polyvinyl butyral, a laminated glass suitable for a side window glass can be produced. As the method for producing a laminated glass, a known method can be used.

### 3. Measurement of the thickness of compressive stress layer

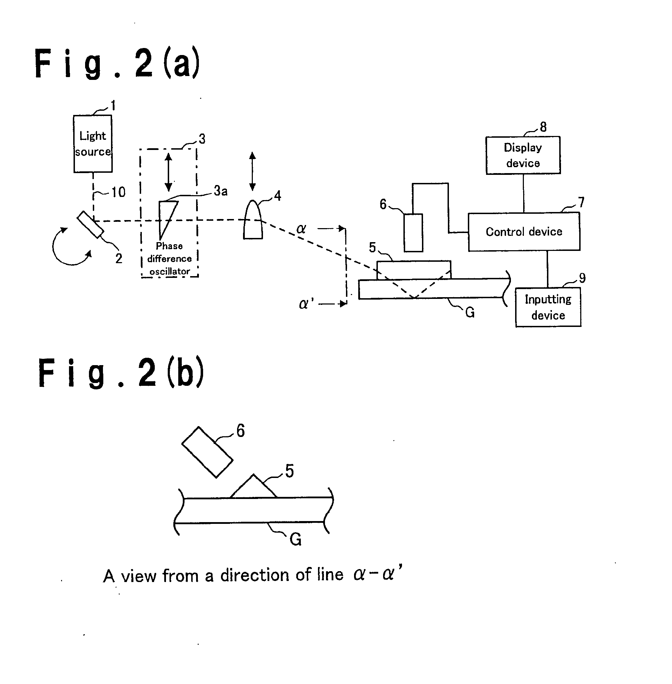

Now, a method of measuring the thickness of a compressive stress layer and an apparatus for the measurement will be described with reference to the drawings. Figs 2(a) and 2(b) are diagrams illustrating an apparatus for measuring the thickness of a compressive stress layer. As shown in Fig. 2(a), light 10 emitted from a light source 1, such as a green laser, is reflected by a mirror 2 and enters into a phase differential oscillator 3, and the phase of incident light 10 is adjusted by a desired degree by a phase differential oscillator 3 and enters into a lens 4. The phase difference oscillator 3 has an optical component having a wedge-shaped cross-section (hereinafter referred to as wedge 3a). By this sliding of the wedge 3a vertically in the Fig. (a direction indicated by a bi-directional arrow in Fig. 2(a)), the path length of light 10 passing through the wedge 3a changes, and the phase of light 10 coming out from the wedge 3a changes.

Light 10 came out from the wedge 3a enters into the lens 4, and the incident light 10 in the lens 4 is refracted by a desired angle by means of the lens 4, and enters into an end surface of a triangular prism 5. The prism 5 is placed on a glass plate G via a refraction liquid (a liquid having the same refractive index as that of the glass plate G). The lens 4 has a shape corresponding to a half of a normal round lens shape, and can be optionally slided in a vertical direction in the Fig. (a direction indicated by a bi-directional arrow in Fig. 2(a)) in the same manner as the wedge 3a.

By this sliding, the direction of the light coming out from the lens 4 moves vertically, whereby the incident position at the prism 5 can be adjusted. The light entered into the prism 5 passes through the prism 5 and enters into the glass plate G. Scattered light 11 generated at that time comes out from an oblique plane of the prism 5 and picked up as an image by a CCD camera 6. The image signal thereby obtained is transmitted to a control device 7, and the image signal processed by the control device 7 is displayed on a display device 8. An operator (a person who operates) can control the operation of the control device 7 by operating an inputting device 9.

Here, as shown in Fig. 2(b), the prism 5 on the glass plate G is a triangular prism having a cross-sectional shape of isosceles triangle and is made of silica glass. The CCD camera 6 is set orthogonally to the oblique plane of the prism 5, and the image picked up by the CCD camera 6 is displayed on the display device 8 by the function of the control device 7. Here, the display device 8 is a common display device such as CRT or LCD, and the inputting device 9 is a common inputting device such as a keyboard or a mouse.

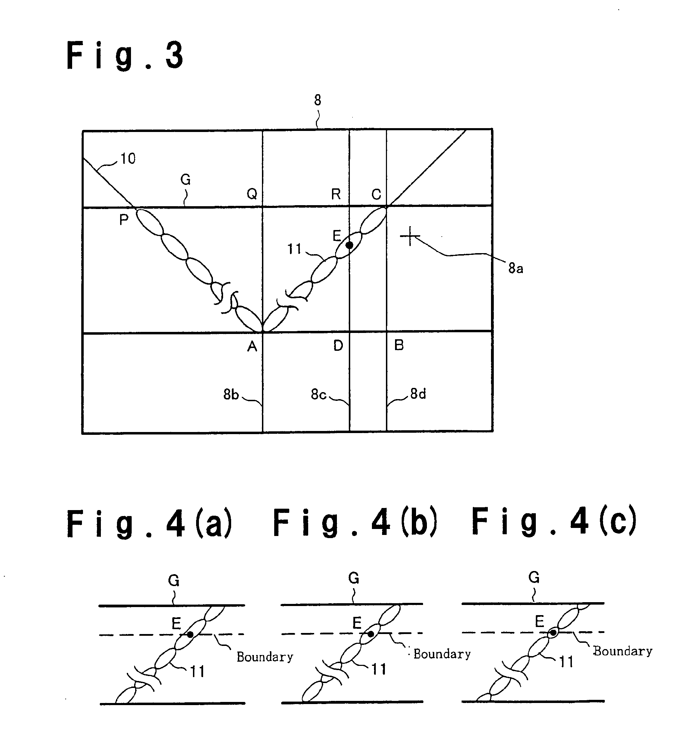

Fig. 3 is a plan view schematically showing scattered lights 10 and 11 displayed on the display device 8. As shown in Fig., the glass sheet G and scattered light 11 passing through the glass sheet G are displayed on the display device 8, and further, a mouse pointer 8a and bar-shaped cursors 8b to 8d to be used for measuring the thickness of the compressive stress layer are also displayed. Scattered light 10 enters into the glass sheet G from the point P in the Fig., and in the glass sheet G, scattered light 11 is observed as a plurality of beaded small ellipsoidal patterns. Scattered light 11 reached the backside (point A) of the glass sheet G is totally reflected toward the front side of the glass sheet G. The trail of reflected scattered light 11 is observed as beaded small ellipsoidal patterns in the same manner as mentioned above, and exits to the outside from the surface (point C) of the glass sheet G.

The operator can optionally move the mouse pointer 8a on the screen by operating the inputting device 9 in Fig. 2. Then, by moving the mouse pointer 8a to a desired position and clicking a button (not shown) of the inputting device 9, the bar-shaped cursors 8b, 8c and 8d can be placed at optional positions. In order to measure the thickness of the compressive stress layer (it corresponds to distance RE in this Fig.), the cursor 8b is placed to align to point A and the cursor 8b is placed to align to point C. Further, the cursor 8c is placed to align to point E on the border of the compressive stress layer and the tensile stress layer. Point E can be discovered by an operation shown in Figs 4(a) to 4(c), which is as follows.

Figs 4(a) to 4(c) are diagrams schematically illustrating scattered light 11 changed by adjustment of the phase difference oscillator 3. By sliding the wedge 3a of the phase difference oscillator 3 vertically (a direction indicated by a bi-directional arrow in Fig. 2(a)), the phase of light 10 entering into the glass sheet G is changed. As a result, small ellipses in the glass sheet G move forward or backward along the trail of scattered light 11 according to the phase change.

Here, there is a characteristic that the moving direction of small ellipses in a compressive stress layer and in a tensile stress layer are opposite. Accordingly, by moving the phase of light 10 forward or backward from the state shown in Fig. 4(b), small ellipses spring out (Fig. 4(a)) or are drawn in (Fig. 4(c)) about point E on the border of the stress layers (a broken line in the Figs.). Here, since the broken line showing the border or point E is not displayed on the display device 8, it is necessary to observe carefully to find the position where small ellipses are drawn in or spring out, and place the cursor 8c at a position to be considered as point E.

After three cursors 8b, 8c and 8d are placed in this manner, the control device 7 calculates the thickness of the compressive stress layer (distance RE) using a relation AB:AD=BC:DE (triangle ABC and triangle ADE are similar) and that the thickness BC of the glass sheet G is known (the operator inputs it in advance).

Table 1 shows the results of tests on laminated glasses used as front glasses of automobiles, applying various bending methods. From (1) to (3) are ones wherein a glass sheet was cooled as being transported without a ring, and (4) and (5) are ones wherein a glass sheet is cooled as being supported by a ring at its peripheral portion, and the flow rate of cooling air to the peripheral portion is adjusted. In all cases (including car interior side and car exterior side), the relation between the glass thickness (t) and the minimum thickness (a) of the compressive stress layer in the direction of glass thickness satisfied 0.1≦a/t≦0.2, and the relation between the glass thickness (t) and the average thickness (b) of the compressive stress layer in the direction of glass thickness satisfied 0.15≦b/t≦ 0.25.

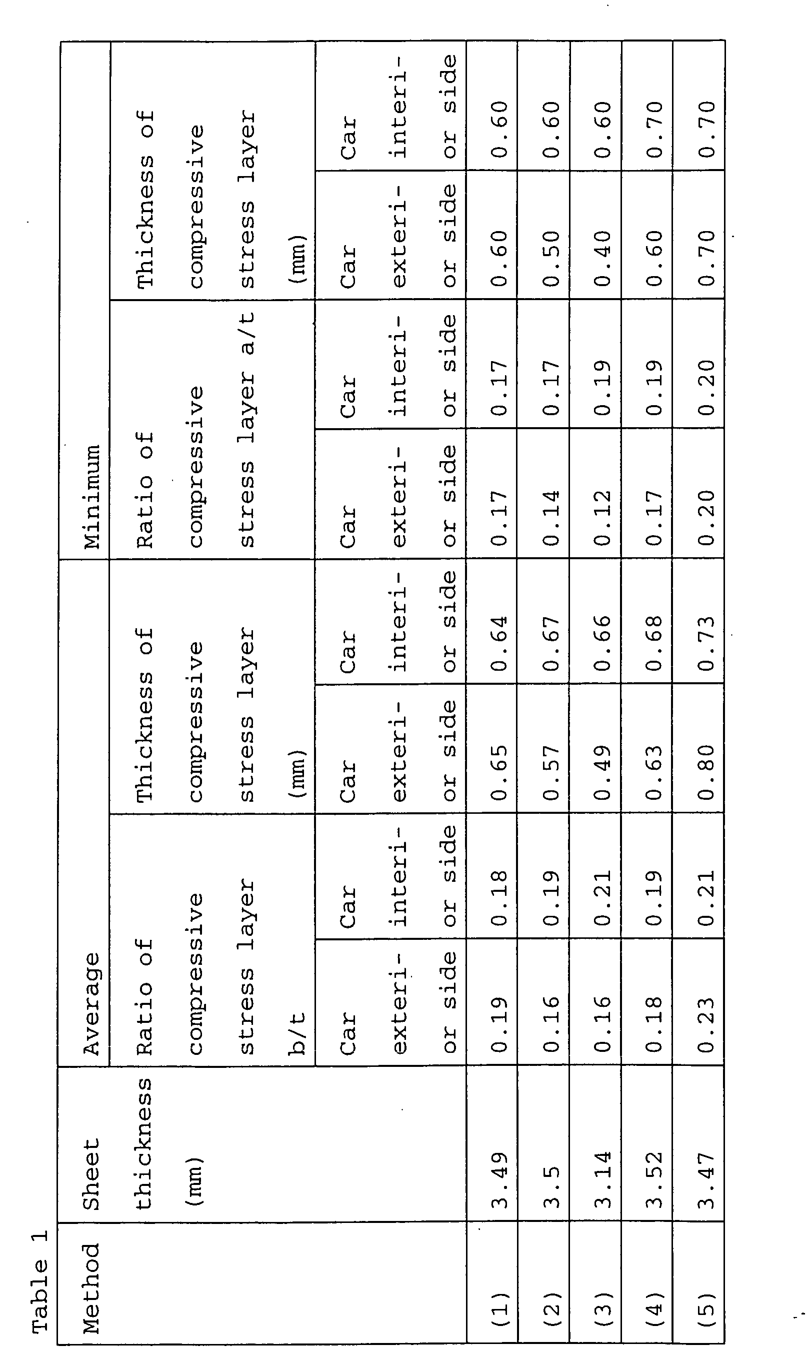

As described in the foregoing, on the basis of a discovery of the optimum relation between the thickness of the sheet and the thickness of the compressive stress layer, the present invention provides a tempered glass having sufficient strength and a laminated glass employing it. Further, by employing the present invention, it is possible to know the optimum thickness of the compressive stress layer when it is desired to reduce the thickness of a rear window glass or a side window glass for automobiles.

Further, the present invention can be employed for a window glass not only for automobiles, but also for railroad trains, airplanes, ships or buildings.

Further, by using an interlayer having infrared shielding fine particles with a particle diameter of at most 0.2 µm incorporated and dispersed therein, collision safety of automobiles"can be improved, and a laminated glass for sliding windows, having a thermal ray shielding property can be provided. As a material for infrared ray shielding fine particles, infrared ray shielding fine particle made of a metal, oxide, nitride or sulfide of Sn, Ti, Si, Zn, Zr, Fe, Al, Cr, Co, Ce, In, Ni, Ag, Cu, Pt, Mn, Ta, W, V and/or Mo, or made of such a material doped with Sb or F, may, for example, be mentioned. Those fine particles can be used alone or as a composite. Further, a mixed material of such a single material or composite with an organic resin, or a doped material of such a single material or composite doped with an organic resin, may be mentioned.

Further, as infrared shielding fine particles, antimony-doped tin oxide (ATO) fine particles, or tindoped indium oxide (ITO) fine particles may preferably be used. Both of ATO fine particles and ITO fine particles are excellent in the infrared shielding ability. Accordingly, the amount of incorporation in an interlayer may be small. Here, ITO fine particles are superior in the infrared shielding property as compared with ATO fine particles, and it is particularly preferred to use the ITO fine particles as infrared shielding fine particles. Further, by adjusting the blend ratio of infrared shielding fine particles in the interlayer to be from 0.1 to 0.5 part by mass based on 100 parts by mass of the total amount of the interlayer, a temperature rise in a car by transmission of infrared rays can be prevented, while realizing an infrared ray communication between inside and outside of the car.

The entire disclosure of Japanese Patent Application No. 2001-232359 filed on July 31, 2001 including specification, claims, drawings and summary are incorporated herein by reference in its entirety.

## Claims

1. A tempered glass having a compressive stress layer formed at the surface and a tensile stress layer formed inside, wherein the glass thickness (t) is from 1.5 to 3.5 mm, and the minimum thickness (a) of the compressive stress layer in the direction of glass thickness is from 0.15 to 0.7 mm.

2. The tempered glass according to Claim 1, wherein the relations between the glass thickness (t) and the minimum thickness (a) of the compressive stress layer in the direction of glass thickness and between the glass thickness (t) and an average thickness (b) of the compressive stress layer in the direction of glass thickness, satisfy 0.1≦a/t≦0.2 and 0.15≦b/t≦0.25.

3. The tempered glass according to Claim 1 or 2, which has a curved shape.

4. The tempered glass according to any one of Claims 1 to 3, which is produced by tempering by air-quenching.

5. The tempered glass according to any one of Claims 1 to 4 which is to be used as a window glass for automobiles.

6. A laminated glass comprising multiple glass sheets bonded one another via an interlayer, wherein at least one of said multiple glass sheets is the tempered glass as defined in Claim 1 or 2.

7. The laminated glass according to Claim 6, wherein the interlayer has infrared shielding fine particles having a particle diameter of at most 0.2 µm incorporated and dispersed therein.

8. The laminated glass according to Claim 7, wherein the infrared shielding fine particles are made of any one selected from the group consisting of indium oxide doped with tin, and tin oxide doped with antimony.

9. The laminated glass according to Claim 7, wherein the infrared shielding fine particles are fine particles made of a metal, oxide, nitride or sulfide of Sn, Ti, Si, Zn, Zr, Fe, Al, Cr, Co, Ce, In, Ni, Ag, Cu, Pt, Mn, Ta, W, V, and/or Mo, or made of such a material doped with Sb or F.

10. The laminated glass according to any one of Claims 6 to 9, which is to be used as a window glass for automobiles.
